# EUROPÄISCHE PATENTANMELDUNG

(11) **EP 2 520 396 A1**
(43) Veröffentlichungstag der Anmeldung: **07.11.2012**
(21) Anmeldenummer: 12166103.7
(22) Anmeldetag: 30.04.2012
(51) Int. Cl.: B23Q 11/10

(54) **Kühlmittelzufuhr**

(30) Priorität: 06.05.2011 DE 102011050176
(71) Anmelder: Gühring OHG, 72458 Albstadt (DE)
(72) Erfinder: Schanz, Gerhard, 72393 Burladingen (DE)
(74) Vertreter: Meitinger, Thomas Heinz

(57) **Zusammenfassung**

Die Beschreibung umfasst ein Schneidwerkzeug 307 zur spanenden Bearbeitung eines Werkstücks umfassend: einen Kühlmittelkanal 304, 305 zum Leiten eines Kühlund/oder Schmiermittelstroms, wobei der Kühlmittelkanal 304, 305 zumindest abschnittsweise ein Innengewinde 308 aufweist.

## Beschreibung

### GEBIET DER ERFINDUNG

Die vorliegende Erfindung betrifft ein Schneidwerkzeug zur spanenden Bearbeitung eines Werkstücks, einen Einsatz für ein Schneidwerkzeug und ein Schneidwerkzeugsystem zur spanenden Bearbeitung eines Werkstücks.

### HINTERGRUND DER ERFINDUNG

Im Stand der Technik sind Schneidwerkzeuge bekannt, die eine spanende Bearbeitung eines Werkstücks mit Schneiden ermöglichen.

### ZUSAMMENFASSUNG DER ERFINDUNG

Eine klassische Aufgabe bei einem spanenden Werkzeug ist es, für eine ausreichende Versorgung der Schneiden mit Kühl- und/oder Schmiermittel zu sorgen. Typischerweise wird das Kühl- und/oder Schmiermittel in einer zentralen Bohrung in die Nachbarschaft der Schneiden geführt, wobei es erforderlich sein kann, den Kühl- und/oder Schmiermittelstrom von der zentralen Bohrung zu radial versetzten Schneiden zu befördern. Hierzu können radial verlaufende Bohrungen genutzt werden, deren Herstellung allerdings einen erheblichen konstruktiven und herstellungstechnischen Aufwand bedeuten kann.

Eine Aufgabe ist daher, eine Versorgung von radial versetzten Schneiden eines Werkzeugs mit Kühl- und/oder Schmiermittel sicherzustellen, wobei das Werkzeug selbst sich durch eine einfache und daher günstige Herstellbarkeit auszeichnen soll.

Als erste Ausführungsform der Erfindung wird ein Schneidwerkzeug zur spanenden Bearbeitung eines Werkstücks zur Verfügung gestellt, umfassend: einen Kühlmittelkanal zum Leiten eines Kühl- und/oder Schmiermittelstroms, wobei der Kühlmittelkanal zumindest abschnittsweise ein Innengewinde aufweist.

Die Anordnung eines Innengewindes innerhalb eines Kühlmittelkanals ermöglicht beispielsweise das lösbare Einsetzen einer Schraube in den Kühlmittelkanal, wodurch der Kühl- und/oder Schmiermittelfluss beschränkt und/oder gerichtet werden kann. Hierdurch kann insbesondere dem Kühl- und/oder Schmiermittelfluss eine Richtung gegeben werden, die zu den Schneiden des Werkzeugs zeigen kann.

Als zweite Ausführungsform der Erfindung wird ein Einsatz für ein Schneidwerkzeug zur Verfügung gestellt, umfassend: einen Schaft mit einem Außengewinde zum Einschrauben in das Innengewinde und einen Kopf zum Leiten des Kühl- und/oder Schmiermittelstroms.

Ein Einsatz zum festen lösbaren oder unlösbaren Einsetzen in einen Kühlmittelkanal eines Schneidwerkzeugs eröffnet die Möglichkeit einen austretenden Kühl- und/oder Schmiermittelstrom in seiner Richtung derart umzulenken, dass eine ausreichende Versorgung von Schneiden des Schneidwerkzeugs mit Kühl- und/oder Schmiermittel auch bei Verwendung einer nur geringen Menge von Kühl- und/oder Schmiermittel sichergestellt werden kann. Hierdurch kann eine ökonomische Verwendung von Kühl-und/oder Schmiermittel ermöglicht werden.

Als dritte Ausführungsform der Erfindung wird ein Schneidwerkzeugsystem zur spanenden Bearbeitung eines Werkstücks zur Verfügung gestellt, umfassend: ein Schneidwerkzeug nach einem der Ansprüche 1 oder 2 und ein Einsatz nach einem der Ansprüche 3 bis 6.

Als vierte Ausführungsform der Erfindung wird ein Schneidwerkzeugsystem zur spanenden Bearbeitung eines Werkstücks zur Verfügung gestellt, umfassend: ein Schneidwerkzeug mit einem Kühlmittelkanal und einen Einsatz mit einem Schaft, wobei der Schaft in den Kühlmittelkanal lösbar oder unlösbar einsetzbar ist.

Das Einsetzen eines Einsatzes, wie z.B. einer Schraube, in eine Austrittsöffnung eines Kühlmittelkanalabschnittes eröffnet die Möglichkeit einen innerhalb des Kühlmittelkanals geführten Kühl- und/oder Schmiermittelstrom in seiner Austrittsmenge pro Zeit bzw. seiner Orientierung zu steuern. Hierdurch kann ein ökonomischer Verbrauch an Kühl- und/oder Schmiermittel ermöglicht werden bzw. eine zielgerichtete Benetzung von Schneiden des Schneidwerkzeugs mit Kühl- und/oder Schmiermittel erfolgen.

Beispielhafte Ausführungsformen werden in den abhängigen Ansprüchen beschrieben.

Gemäß einer beispielhaften Ausführungsform der Erfindung wird ein Schneidwerkzeug zur Verfügung gestellt, wobei der Kühlmittelkanal zentral angeordnet ist.

Eine zentrale Anordnung eines Kühlmittelkanals ermöglicht eine Herstellung eines Schneidwerkzeugs, das sich durch eine gleichmäßige mechanische Stabilität entlang des Umfangs auszeichnen kann.

In einer weiteren erfindungsgemäßen Ausführungsform wird ein Einsatz zur Verfügung gestellt, wobei der Einsatz einen Absatz als Anschlag aufweist.

Die Anordnung eines Anschlags am Einsatz ermöglicht im Zusammenspiel mit einem entsprechenden Schneidwerkzeug das Begrenzen der Eindringtiefe bzw. der Einschraubtiefe des Einsatzes in das Schneidwerkzeug. Hierdurch kann sichergestellt werden, dass nur eine vorbestimmte Menge an Kühl- und/oder Schmiermittel pro Zeit aus dem Kühlmittelkanal des Schneidwerkzeugs austreten kann.

Gemäß einem weiteren Ausführungsbeispiel der vorliegenden Erfindung wird ein Einsatz zur Verfügung gestellt, wobei der Kopf abgeflacht ausgebildet ist.

Durch die Ausbildung eines abgeflachten Kopfes an dem Einsatz kann das Schneidwerkzeug auch bei eingesetztem Einsatz tief in ein Werkstück eingeführt werden.

Gemäß einer beispielhaften Ausführungsform der Erfindung wird ein Einsatz zur Verfügung gestellt, wobei der Schaft eine oder beliebig viele Abflachungen und/oder eine oder beliebig viele Ausnehmungen aufweist und/oder wobei die Abflachungen bzw. die Ausnehmungen entlang der Längsachse des Einsatzes ausgebildet sind.

Die Ausbildungen von Abflachungen bzw. Ausnehmungen entlang einer Längsachse des Einsatzes, also beispielsweise parallel oder wendelförmig in Richtung der Längsachse, ermöglicht bei eingesetztem Einsatz das Vorbeiströmen eines Kühl- und/oder Schmiermittelstroms an dem Einsatz, wodurch eine Versorgung von Schneiden des Schneidwerkzeugs sichergestellt werden kann.

In einer weiteren erfindungsgemäßen Ausführungsform wird ein Schneidwerkzeugsystem zur Verfügung gestellt, wobei der Einsatz einen abgeflachten Kopf aufweist und/oder wobei der Schaft eine oder beliebig viele Abflachungen und/oder eine oder beliebig viele Ausnehmungen aufweist und/oder wobei die Abflachungen bzw. die Ausnehmungen entlang der Längsachse des Einsatzes ausgebildet sind.

Gemäß einem weiteren Ausführungsbeispiel der vorliegenden Erfindung wird ein Schneidwerkzeugsystem zur Verfügung gestellt, wobei der Kühlmittelkanal zentral angeordnet ist und/oder wobei der Kühlmittelkanal ein Innengewinde aufweist und der Schaft ein Außengewinde umfasst.

Eine Anordnung eines Innengewindes am Schneidwerkzeug und eines Außengewindes am Einsatz ermöglicht ein schnelles festes, lösbares Verbinden des Einsatzes mit einem entsprechenden Schneidwerkzeug, wodurch sich eine kostengünstige Montage eines Schneidwerkzeugsystems ergeben kann.

Als eine Idee der Erfindung kann angesehen werden, ein Schneidwerkzeug zur Verfügung zu stellen, das an seiner Vorderseite eine Austrittsöffnung eines Kühlmittelkanals aufweist, wobei in diese Austrittsöffnung ein Einsatz eingebracht werden kann. Der Einsatz kann derart ausgebildet sein, dass ein an der Vorderseite austretender Kühl- und/oder Schmiermittelstrom zu Schneiden des Werkzeugs gelenkt werden kann. Hierdurch kann eine ausreichende Versorgung von am Werkzeug radial versetzt angeordneten Schneiden ermöglicht werden, ohne dass hierzu eine aufwändige konstruktive Ausbildung des Werkzeugs, etwa durch radial verlaufende Bohrungen, nötig wäre.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Figur 1 ein Schneidwerkzeug in einer Vorderansicht,
Figur 2 ein Schneidwerkzeug in einer seitlichen Ansicht mit aufgesetzter Schraube,
Figur 3 dasselbe Schneidwerkzeug mit eingedrehter Schraube,
Figur 4 eine Schraube,
Figur 5 dieselbe Schraube um ihre Längsachse um 90° gedreht.

### DETAILLIERTE BESCHREIBUNG BEISPIELHAFTER

### AUSFÜHRUNGSFORMEN

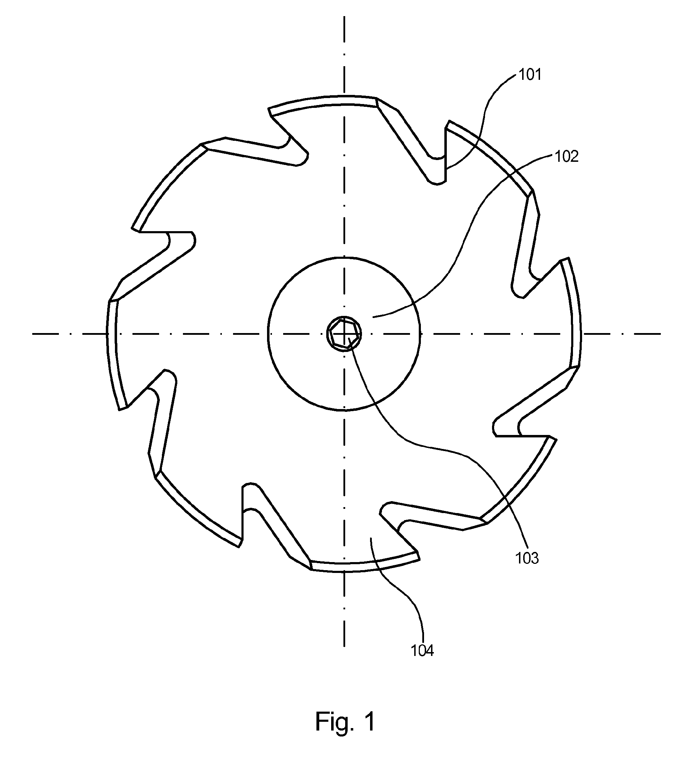

Figur 1 zeigt ein Schneidwerkzeug in einer Vorderansicht mit mehreren Schneiden 101. Das Schneidwerkzeug weist einen zentralen Kühlmittelkanal auf, der zur Versorgung der Schneiden 101 mit Kühl- und/oder Schmiermittel vorgesehen ist. In diesen Kühlmittelkanal kann eine Schraube 102 mit abgeflachtem Kopf eingesteckt bzw. eingedreht werden. Zum Eindrehen bzw. Einstecken kann die Schraube 102 beispielsweise einen Eingriff 103 für einen Inbus aufweisen. Die Schraube 102 hat dabei die Aufgabe ein Umlenken des Kühl- und/oder Schmiermittelflusses aus dem zentralen Kühl-und/oder Schmiermittelkanal zu ermöglichen. Hierdurch soll ein Benetzen der Schneiden 101 mit Kühl- und/oder Schmiermittel erreicht werden. Selbst falls der Kühl-und/oder Schmiermittelfluss hierbei nicht direkt auf die Schneiden 101 gerichtet werden kann, kann doch eine Versorgung der Schneiden 101 mit Kühl- und/oder Schmiermittel dadurch erreicht werden, dass zum einen das Schneidwerkzeug um seine Längsachse rotiert und dadurch ein radial verlaufender Kühl- und/oder Schmiermittelstrom den Umfang des Schneidwerkzeugs gleichmäßig benetzt. Außerdem wird zwischen dem vorderen Bereich 104 des Schneidwerkzeugs und dem zu bearbeitenden Werkstück ein Kanal gebildet wird, durch den das Kühl- und/oder Schmiermittel zu den Schneiden 101 geführt werden kann.

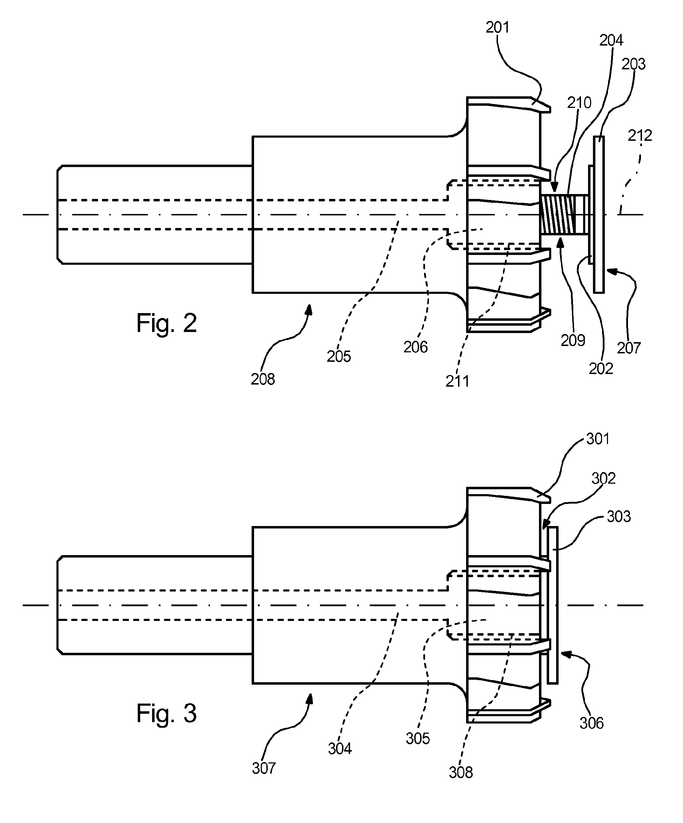

Figur 2 zeigt dasselbe Schneidwerkzeug 208 in einer seitlichen Ansicht mit Schneiden 201, wobei diese Schneiden 201 als eingesetzte Schneidplatten ausgebildet sein können. In das Schneidwerkzeug 208 kann eine Schraube 207 eingesteckt bzw., falls die Schraube ein Außengewinde 204 und der Kühlmittelkanalabschnitt 206 ein Innengewinde 211 aufweist, eingedreht werden. Die Schraube 207 kann einen Absatz 202 umfassen, der als Anschlag, z.B. im Zusammenspiel mit einer Vertiefung des Schneidwerkzeugs 208, dienen kann. Hierdurch kann eine maximale Eindringtiefe bzw. Einschraubtiefe der Schraube 207 sichergestellt werden kann. Der Kühlmittelkanal des Schneidwerkzeugs 208 kann einen ersten Kühlmittelkanalabschnitt 206 und einen weiteren Kühlmittelkanalabschnitt 205 aufweisen, die einzelnen Kühlmittelkanalabschnitte 205, 206 können unterschiedliche Durchmesser bzw. Querschnitte aufweisen. Das Kühl- und/oder Schmiermittel kann links in den zentralen Kühlmittelkanal eingespeist werden und durchläuft nach rechts die Kühlmittelkanalabschnitte 205, 206. An der rechten Vorderseite des Schneidwerkzeugs 208 kann das Kühl- und/oder Schmiermittel austreten. Die Schraube 207 verschließt im eingedrehten bzw. eingesetzten Zustand teilweise die Austrittsöffnung des Kühlmittelkanalabschnitts 206, wobei jedoch eine, zwei, drei oder beliebig viele Öffnungen an der Vorderseite des Schneidwerkzeugs 208 dadurch bestehen bleiben können, dass Abflachungen 209, 210 an der Schraube 207 vorhanden sind. Diese Abflachungen 209, 210 ermöglichen ein Vorbeiführen des Kühl- und/oder Schmiermittelstroms an der eingesetzten bzw. eingedrehten Schraube 207. Durch den Kopf 203 der Schraube 207 findet ein Umlenken des Kühl- und/oder Schmiermittelstroms in Richtung zu den Schneiden 201 statt. Eine genaue Orientierung des Kühl- und/oder Schmiermittelstroms ist dabei nicht notwendig, da der Kühl- und/oder Schmiermittelstrom zwischen Vorderseite des Schneidwerkzeugs 208 und Kopf der Schraube 207 bzw. zu bearbeitendem Werkstück geführt werden kann. Die Rotation des Schneidwerkzeugs 208 um seine Längsachse 212 führt außerdem zu einer gleichmäßigen Versorgung der Schneiden 201 mit Kühl- und/oder Schmiermittel.

Figur 3 zeigt das Schneidwerkzeug der Figur 2 mit vollständig eingesetzter bzw. eingedrehter Schraube 306. Das Schneidwerkzeug 307 weist einen zentralen Kühlmittelkanal mit einem ersten Abschnitt 304 und einem zweiten Abschnitt 305 auf, wobei der zweite Abschnitt 305 ein Innengewinde 308 umfassen kann. Aufgrund dieses Innengewindes 308 kann eine Schraube 306 in den zentralen Kühlmittelkanalabschnitt 305 eingeschraubt werden, wodurch die Ausgangsöffnung des Kühlmittelkanals verkleinert wird und ein Umlenken des Kühl- und/oder Schmiermittelstroms um ca. 90° ermöglicht werden kann. Hierdurch kann der Kühl- und/oder Schmiermittelstrom in Richtung zu den Schneiden 301 gelenkt werden, wodurch eine ausreichende Versorgung der Schneiden 301 mit Kühl- und/oder Schmiermittel sichergestellt werden kann. Die Schraube 306 kann soweit eingeschraubt werden, bis sich ein definierter Spalt 302 zwischen Schneidwerkzeug 307 und Schraubenkopf 303 ergibt, der durch einen Anschlag vorbestimmt werden kann.

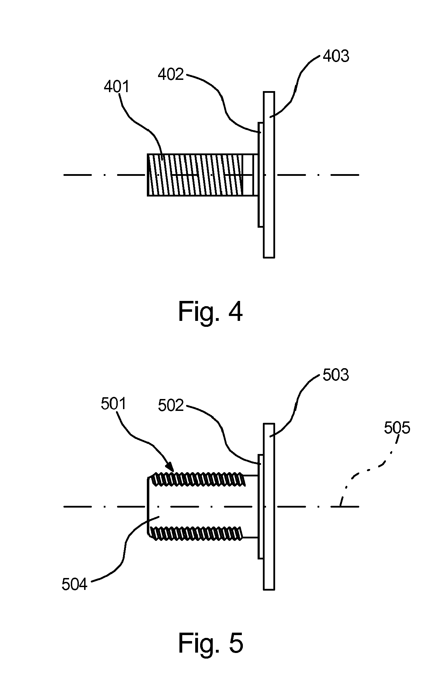

Figur 4 zeigt eine erfindungsgemäße Schraube mit einem abgeflachten Schraubenkopf 403 und einem Außengewinde 401. Ferner ist ein Absatz 402 dargestellt, der als Anschlag dienen kann, damit bei maximaler Eindringtiefe bzw. Einschraubtiefe der Schraube sich ein minimaler Spalt zwischen Schraube und entsprechendem Schneidwerkzeug für den Kühl- und/oder Schmiermittelstrom ergeben kann.

Figur 5 zeigt dieselbe Schraube, die im Vergleich zur Darstellung in Figur 4 um 90° um ihre Längsachse 505 gedreht abgebildet ist. Die Schraube weist eine Abflachung 504 auf, wobei im Bereich der Abflachung 504 kein Gewinde vorhanden ist. Die Abflachung 504 dient dazu, dass Kühl- und/oder Schmiermittel an dem Schaft der Schraube vorbei aus dem Schneidwerkzeug austreten kann. Die Schraube kann statt einer oder mehrerer Abflachungen 504 auch sonstige Aussparungen und/oder Ausbildungen aufweisen, um eine Möglichkeit zu schaffen, dass Kühl- und/oder Schmiermittel an der Schraube vorbei aus dem Schneidwerkzeug austreten kann. Mehrere Abflachungen und/oder Aussparungen können bezüglich einer Längsachse 505 symmetrisch oder unsymmetrisch angeordnet sein.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Schneide
- 102: Schraube
- 103: Eingriff
- 104: Vorderseite eines Schneidwerkzeugs
- 201: Schneide
- 202: Absatz
- 203: Schraubenkopf
- 204: Außengewinde
- 205: Kühlmittelkanalabschnitt
- 206: Kühlmittelkanalabschnitt
- 207: Schraube
- 208: Schneidwerkzeug
- 209: Abflachung
- 210: Abflachung
- 211: Innengewinde
- 212: Längsachse
- 301: Schneide
- 302: Spalt
- 303: Schraubenkopf
- 304: Kühlmittelkanalabschnitt
- 305: Kühlmittelkanalabschnitt
- 306: Schraube
- 307: Schneidwerkzeug
- 401: Außengewinde
- 402: Absatz
- 403: Schraubenkopf
- 501: Außengewinde
- 502: Absatz
- 503: Schraubenkopf
- 504: Abflachung
- 505: Längsachse

## Patentansprüche

1. Schneidwerkzeug (307) zur spanenden Bearbeitung eines Werkstücks umfassend
einen Kühlmittelkanal (304, 305) zum Leiten eines Kühl- und/oder Schmiermittelstroms,
**dadurch gekennzeichnet, dass**
der Kühlmittelkanal (304, 305) zumindest abschnittsweise ein Innengewinde (308) aufweist.

2. Schneidwerkzeug (307) nach Anspruch 1, **dadurch gekennzeichnet, dass** der Kühlmittelkanal (304, 305) zentral angeordnet ist.

3. Einsatz für ein Schneidwerkzeug nach einem der vorhergehenden Ansprüche, umfassend
einen Schaft mit einem Außengewinde (501) zum Einschrauben in das Innengewinde und
einen Kopf (503) zum Leiten des Kühl- und/oder Schmiermittelstroms.

4. Einsatz nach Anspruch 3, **dadurch gekennzeichnet, dass** der Einsatz einen Absatz (502) als Anschlag aufweist.

5. Einsatz nach einem der Ansprüche 3 oder 4, **dadurch gekennzeichnet, dass** der Kopf (503) abgeflacht ausgebildet ist.

6. Einsatz nach einem der Ansprüche 3 bis 5, **dadurch gekennzeichnet, dass** der Schaft eine oder beliebig viele Abflachungen (504) und/oder eine oder beliebig viele Ausnehmungen aufweist und/oder wobei die Abflachungen (504) bzw. die Ausnehmungen entlang der Längsachse (505) des Einsatzes ausgebildet sind.

7. Schneidwerkzeugsystem zur spanenden Bearbeitung eines Werkstücks, umfassend ein Schneidwerkzeug (208, 307) nach einem der Ansprüche 1 oder 2 und
ein Einsatz nach einem der Ansprüche 3 bis 6.

8. Schneidwerkzeugsystem zur spanenden Bearbeitung eines Werkstücks, umfassend
ein Schneidwerkzeug (208, 307) mit einem Kühlmittelkanal (205, 206, 304, 305) und
einen Einsatz mit einem Schaft, wobei der Schaft in den Kühlmittelkanal (206, 305) lösbar oder unlösbar einsetzbar ist.

9. Schneidwerkzeugsystem nach Anspruch 8, **dadurch gekennzeichnet, dass** der Einsatz einen abgeflachten Kopf (203, 303) aufweist und/oder wobei der Schaft eine oder beliebig viele Abflachungen (209, 210) und/oder eine oder beliebig viele Ausnehmungen aufweist und/oder wobei die Abflachungen (209, 210) bzw. die Ausnehmungen entlang der Längsachse des Einsatzes ausgebildet sind.

10. Schneidwerkzeugsystem nach einem der Ansprüche 8 oder 9, **dadurch gekennzeichnet, dass** der Kühlmittelkanal (205, 206, 304, 305) zentral angeordnet ist und/oder wobei der Kühlmittelkanal (206, 305) ein Innengewinde (211, 308) aufweist und der Schaft ein Außengewinde (204) umfasst.
